# EUROPÄISCHE PATENTANMELDUNG

(11) **EP 3 839 430 A1**
(43) Veröffentlichungstag der Anmeldung: **23.06.2021**
(21) Anmeldenummer: 19216532.2
(22) Anmeldetag: 16.12.2019
(51) Int. Cl.: G01C 15/00

(54) **LASERSYSTEM MIT EINER VERSTELLBAREN FOKUSSIEROPTIK**

(71) Anmelder: Hilti Aktiengesellschaft, 9494 Schaan (LI)
(72) Erfinder: Dang, Lieu-Kim, 9473 Gams (CH); Nuesch, Hanspeter, 9492 Eschen (LI)
(74) Vertreter: Hilti Aktiengesellschaft Corporate Intellectual Property

(57) **Zusammenfassung**

Lasersystem (10) zum Erzeugen einer linienförmigen Lasermarkierung (12) auf einer Projektionsfläche (11), aufweisend eine Laserstrahlquelle (15), die einen Laserstrahl (26) erzeugt und entlang einer Ausbreitungsrichtung (27) aussendet, eine Strahlumlenkoptik (21), die den Laserstrahl umlenkt, eine Kontrolleinrichtung (25), die zur Steuerung des Lasersystems (10) ausgebildet ist, und eine Fokussieroptik (14), deren Brennweite und/oder Position verstellbar ist.

## Beschreibung

### Technisches Gebiet

Die vorliegende Erfindung betrifft ein Lasersystem zum Erzeugen einer linienförmigen Lasermarkierung auf einer Projektionsfläche gemäß dem Oberbegriff des Anspruchs 1.

### Stand der Technik

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand zwischen dem Lasersystem und der Projektionsfläche abhängig.

### Darstellung der Erfindung

Die Aufgabe der vorliegenden Erfindung besteht in der Entwicklung eines Lasersystems, das ohne Schutzmaßnahmen eingesetzt werden kann und das auf einer Projektionsfläche eine scharf begrenzte linienförmige Lasermarkierung erzeugt.

Diese Aufgabe wird bei dem eingangs genannten Lasersystem erfindungsgemäß durch die Merkmale des unabhängigen Anspruchs 1 gelöst. Vorteilhafte Weiterbildungen sind in den abhängigen Ansprüchen angegeben.

Das Lasersystem ist erfindungsgemäß dadurch gekennzeichnet, dass das Lasersystem eine Fokussieroptik aufweist, deren Brennweite und/oder Position verstellbar ist. Als Fokussieroptik ist ein optisches Element definiert, das eine endliche Brennweite aufweist und einen auftreffenden Laserstrahl fokussiert. Ein fokussierter Laserstrahl weist im Bereich der Fokuslage einen kleineren Strahldurchmesser auf als ein nicht-fokussierter Laserstrahl. Als optische Achse der Fokussieroptik ist eine Gerade definiert, die durch den Krümmungsmittelpunkt einer gekrümmten Fläche verläuft und senkrecht auf einer planen Fläche steht oder bei zwei gekrümmten Flächen durch die Krümmungsmittelpunkte der gekrümmten Flächen verläuft.

Ein Lasersystem mit einer Fokussieroptik, deren Brennweite und/oder Position verstellbar ist, hat den Vorteil, dass die Breite der linienförmigen Lasermarkierung, die der Laserstrahl auf der Projektionsfläche erzeugt, verändert werden kann. Je schmaler die linienförmige Lasermarkierung auf der Projektionsfläche ist, umso besser ist die linienförmige Lasermarkierung für den Bediener sichtbar, da die verfügbare Leistung von maximal 1 mW bei Lasersystemen der Laserklasse 2 oder 2M auf eine kleinere Fläche verteilt wird und eine höhere Leistungsdichte resultiert.

Bevorzugt ist die Brennweite der Fokussieroptik mittels der Kontrolleinrichtung abhängig von einem Abstand zwischen dem Lasersystem und der Projektionsfläche verstellbar. Eine Fokussieroptik, deren Brennweite abhängig vom Abstand zwischen dem Lasersystem und der Projektionsfläche verstellbar ist, hat den Vorteil, dass auf der Projektionsfläche eine scharf begrenzte linienförmige Lasermarkierung erzeugt werden kann, die eine hohe Qualität aufweist. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

In einer bevorzugten Ausführung weist das Lasersystem eine Distanzmesseinrichtung auf, die ausgebildet ist, den Abstand zwischen dem Lasersystem und der Projektionsfläche zu bestimmen. Besonders bevorzugt weist das Lasersystem eine Strahlteilungsoptik auf, wobei ein Messstrahl der Distanzmesseinrichtung mittels der Strahlteilungsoptik vor der Strahlumlenkoptik in den Strahlengang des Laserstrahls einkoppelbar ist. Die Erweiterung des erfindungsgemäßen Lasersystems um eine Distanzmesseinrichtung hat den Vorteil, dass der Abstand zwischen dem Lasersystem und der Projektionsfläche sehr genau bestimmt werden kann, die Brennweite der Fokussieroptik exakt an den Abstand angepasst werden kann und auf der Projektionsfläche eine scharf begrenzte linienförmige Lasermarkierung mit besserer Sichtbarkeit erzeugt werden kann.

In einer Weiterentwicklung ist das Lasersystem mit einem Laserempfänger über eine Bluetooth-Verbindung verbindbar, wobei das Lasersystem ein erstes Bluetooth-Sende- und/oder Empfangselement aufweist, der Laserempfänger ein zweites Bluetooth-Sende- und/oder Empfangselement aufweist und die Bluetooth-Verbindung das erste und zweite Bluetooth-Sende- und/oder Empfangselement verbindet. Die Bluetooth-Verbindung zwischen dem Lasersystem und dem Laserempfänger kann dazu genutzt werden, den Abstand zwischen dem Lasersystem und der Projektionsfläche zu bestimmen. Der Laserempfänger wird mit einer Rückseite auf der Projektionsfläche in einer Höhe angeordnet, dass der Laserstrahl des Lasersystems vom Laserempfänger erfasst wird.

Das erste oder zweite Bluetooth-Sende- und/oder Empfangselement sendet ein Bluetooth-Signal aus, das vom zweiten bzw. ersten Bluetooth-Sende- und/oder Empfangselement empfangen wird. Bei der Übertragung erfolgt eine Dämpfung des Bluetooth-Signals, wobei die Dämpfung vom Abstand zwischen dem ersten und zweiten Bluetooth-Sende- und/oder Empfangselement abhängig ist. Die Kontrolleinrichtung des Lasersystems oder eine Kontrolleinrichtung des Laserempfängers kann aus dem Verhältnis des gesendeten Signals zum empfangenen Signal den Abstand zwischen dem ersten und ersten Bluetooth-Sende- und/oder Empfangselement bestimmen, der gleich dem Abstand zwischen dem Lasersystem und der Projektionsfläche ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Lasersystems, das als Rotationslaser ausgebildet ist;
- FIG. 2: eine zweite Ausführungsform eines erfindungsgemäßen Lasersystems, das als Linienlaser ausgebildet ist;
- FIG. 3: eine dritte Ausführungsform eines erfindungsgemäßen Lasersystems, das als rotierender Linienlaser ausgebildet ist; und
- FIGN. 4A,: B ein erfindungsgemäßes Lasersystem mit einer Fokussieroptik, deren Brennweite abhängig vom Abstand des Lasersystems zu einer Projektionsfläche verstellbar ist, in einer ersten Variante (FIG. 4A) und einer zweiten Variante (FIG. 4B).

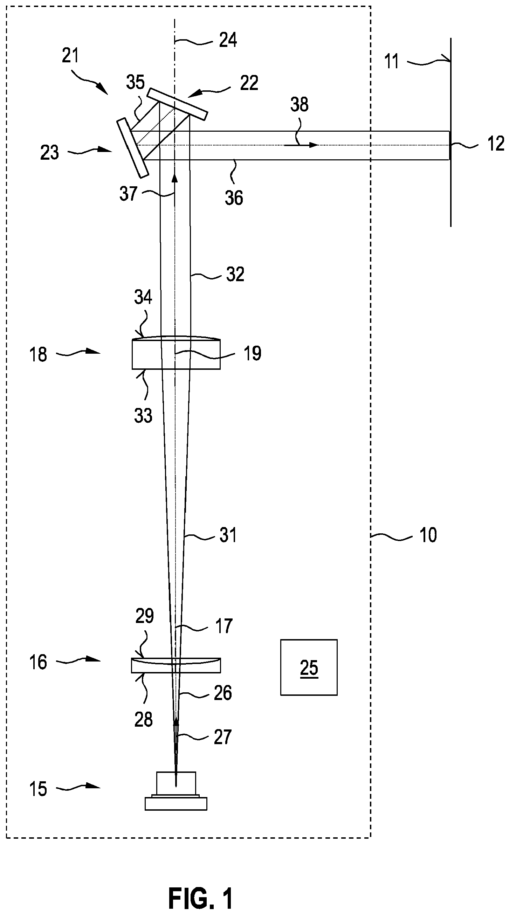

**FIG. 1** zeigt eine erste Ausführungsform eines erfindungsgemäßen Lasersystems **10**, das als Rotationslaser ausgebildet ist und das auf einer Projektionsfläche **11** eine linienförmige Lasermarkierung **12** erzeugt.

Das Lasersystem 10 umfasst eine Laserstrahlquelle **15**, eine als Fokussieroptik ausgebildete erste Strahlformungsoptik **16** mit einer ersten optischen Achse **17**, eine als Kollimationsoptik ausgebildete zweite Strahlformungsoptik **18** mit einer zweiten optischen Achse **19** und eine Strahlumlenkoptik **21** mit einer ersten Spiegelfläche **22** und einer zweiten Spiegelfläche **23**. Die Strahlumlenkoptik 21 ist um eine Rotationsachse **24** verstellbar ausgebildet. Die Steuerung des Rotationslasers 10 erfolgt mittels einer Kontrolleinrichtung **25**, die mit der Fokussieroptik 16 verbunden ist.

Die optischen Komponenten des Rotationslasers 10 sind in der Reihenfolge Laserstrahlquelle 15, Fokussieroptik 16, Kollimationsoptik 18 und Strahlumlenkoptik 21 angeordnet. Dabei sind die erste optische Achse 17 der Fokussieroptik 16, die zweite optische Achse 19 der Kollimationsoptik 18 und die Rotationsachse 24 der Strahlumlenkoptik 21 koaxial zueinander angeordnet.

Die Laserstrahlquelle 15 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren Komponenten des Rotationslasers 11 sind an die Wellenlänge der Laserstrahlquelle 15 angepasst.

Die Laserstrahlquelle 15 erzeugt einen divergenten Laserstrahl **26**, der entlang einer Ausbreitungsrichtung **27** ausgesandt wird und auf die Fokussieroptik 16 gerichtet ist. Die Fokussieroptik 16 ist als Strahlformungsoptik mit einer planen Eintrittsfläche **28** und einer gekrümmten Austrittsfläche **29** ausgebildet und weist eine verstellbare Brennweite **f** auf. Zusätzlich zur verstellbaren Brennweite f kann die Position der Fokussieroptik 16 entlang der ersten optischen Achse 17 verstellbar ausgebildet sein. Als erste optische Achse 17 der Fokussieroptik 16 ist eine Gerade definiert, die durch den Krümmungsmittelpunkt der Austrittsfläche 29 verläuft und senkrecht auf der Eintrittsfläche 28 steht. Die Fokussieroptik 16 erzeugt einen fokussierten Laserstrahl **31**, der auf die Kollimationsoptik 18 gerichtet ist.

Der fokussierte Laserstrahl 31 trifft auf die Kollimationsoptik 18, die den fokussierten Laserstrahl 31 in einen kollimierten Laserstrahl **32** umformt. Die Kollimationsoptik 18 ist als Strahlformungsoptik mit einer planen Eintrittsfläche **33** und einer gekrümmten Austrittsfläche **34** ausgebildet; alternativ kann die Eintrittsfläche als gekrümmte Fläche und die Austrittsfläche als plane Fläche ausgebildet sein oder die Ein- und Austrittsflächen sind als gekrümmte Flächen ausgebildet. Als zweite optische Achse 19 der Kollimationsoptik 18 ist eine Gerade definiert, die durch den Krümmungsmittelpunkt der Austrittsfläche 34 verläuft und senkrecht auf der Eintrittsfläche 33 steht.

Der kollimierte Laserstrahl 32 trifft auf die Strahlumlenkoptik 21, an der ersten Spiegelfläche 22 erfolgt eine erste Umlenkung des kollimierten Laserstrahls 32 und an der zweiten Spiegelfläche 23 erfolgt eine zweite Umlenkung des kollimierten Laserstrahls 32. Der an der ersten Spiegelfläche 22 umgelenkte Laserstrahl wird als einfach umgelenkter Laserstrahl **35** und der an der zweiten Spiegelfläche 23 umgelenkte Laserstrahl als zweifach umgelenkter Laserstrahl **36** bezeichnet. Die erste und zweite Spiegelfläche 22, 23 sind so zueinander ausgerichtet, dass eine Ausbreitungsrichtung **37** des in die Strahlumlenkoptik 21 eintretenden kollimierten Laserstrahls 34 senkrecht zu einer Ausbreitungsrichtung **38** des aus der Strahlumlenkoptik 21 austretenden zweifach umgelenkten Laserstrahls 36 angeordnet ist. Der zweifach umgelenkte Laserstrahl 36 verlässt den Rotationslaser 10 und erzeugt auf der Projektionsfläche 11 die linienförmige Lasermarkierung 12.

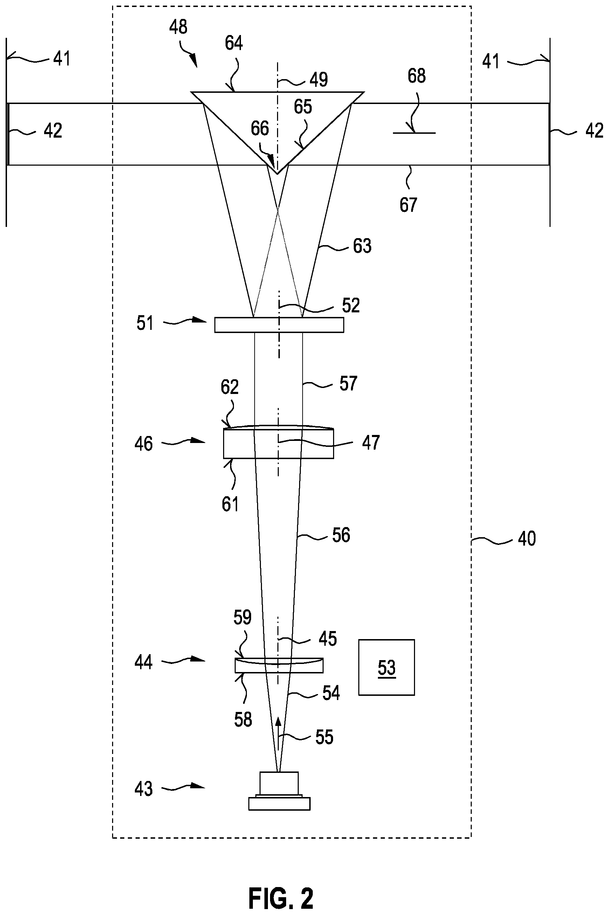

**FIG. 2** zeigt eine zweite Ausführungsform eines erfindungsgemäßen Lasersystems **40**, das als Linienlaser ausgebildet ist und das auf einer Projektionsfläche **41** eine linienförmige Lasermarkierung **42** erzeugt.

Das Lasersystem 40 umfasst eine Laserstrahlquelle **43**, eine als Fokussieroptik ausgebildete erste Strahlformungsoptik **44** mit einer ersten optischen Achse **45**, eine als Kollimationsoptik ausgebildete zweite Strahlformungsoptik **46** mit einer zweiten optischen Achse **47** und eine als Kegelspiegel ausgebildete Strahlumlenkoptik **48** mit einer Kegelachse **49**. Zwischen der Kollimationsoptik 46 und dem Kegelspiegel 48 ist eine als Beugungsgitter ausgebildete dritte Strahlformungsoptik **51** mit einer dritten optischen Achse **52** angeordnet. Die Steuerung des Lasersystems 40 erfolgt mittels einer Kontrolleinrichtung **53**.

Die Komponenten des Lasersystems 40 sind in der Reihenfolge Laserstrahlquelle 43, Fokussieroptik 44, Kollimationsoptik 46, Beugungsgitter 51 und Kegelspiegel 48 angeordnet. Dabei sind die erste optische Achse 45 der Fokussieroptik 44, die zweite optische Achse 47 der Kollimationsoptik 46, die dritte optische Achse 52 des Beugungsgitters 51 und die Kegelachse 49 des Kegelspiegels 48 koaxial zueinander angeordnet.

Die Laserstrahlquelle 43 erzeugt einen divergenten Laserstrahl **54**, der entlang einer Ausbreitungsrichtung **55** ausgesandt wird und auf die Fokussieroptik 44 gerichtet ist. Der Laserstrahl weist bevorzugt eine Strahlverteilung in Form einer Gauß-Verteilung, einer Lorentz-Verteilung oder einer Bessel-Verteilung auf. Diese Strahlverteilungen weisen keinen abrupten Sprung der Intensität auf und unterstützen die Erzeugung einer scharf begrenzten linienförmigen Lasermarkierung auf einer Projektionsfläche. Der divergente Laserstrahl 54 trifft auf die Fokussieroptik 44, die einen fokussierten Laserstrahl **56** erzeugt. Der fokussierte Laserstrahl 56 trifft auf die Kollimationsoptik 46, die den fokussierten Laserstrahl 56 in einen kollimierten Laserstrahl **57** umformt.

Die Fokussieroptik 44 ist wie die Fokussieroptik 16 der FIG. 1 als Strahlformungsoptik mit einer planen Eintrittsfläche **58** und einer gekrümmten Austrittsfläche **59** ausgebildet und weist eine verstellbare Brennweite f auf; die erste optische Achse 45 verläuft durch den Krümmungsmittelpunkt der Austrittsfläche 59 und steht senkrecht auf der Eintrittsfläche 58. Zusätzlich zur verstellbaren Brennweite f kann die Position der Fokussieroptik 44 entlang der ersten optischen Achse 45 verstellbar ausgebildet sein. Die Kollimationsoptik 46 ist wie die Kollimationsoptik 18 der FIG. 1 als Strahlformungsoptik mit einer planen Eintrittsfläche **61** und einer gekrümmten Austrittsfläche **62** ausgebildet; die zweite optische Achse 47 verläuft durch den Krümmungsmittelpunkt der Austrittsfläche und steht senkrecht auf der Eintrittsfläche.

Das Beugungsgitter 51 ist hinter der Kollimationsoptik 46 angeordnet und beispielsweise als Beugungsgitter mit konzentrischen Beugungsstrukturen ausgebildet. Die Eigenschaften des Beugungsgitters 51 werden an die Wellenlänge der Laserstrahlquelle 43 angepasst; mittels der Parameter "Gitterform", "Gitterbreite" und "Gitterhöhe" des Beugungsgitters 51 kann der Laserstrahl umgeformt werden. Als dritte optische Achse 52 des Beugungsgitters 51 ist eine Gerade definiert, die durch das Zentrum der konzentrischen Beugungsstrukturen verläuft und senkrecht auf der Oberfläche des Beugungsgitters 51 steht.

Der kollimierte Laserstrahl trifft auf das Beugungsgitter 51, das den Laserstrahl in einen Ringstrahl **63** mit einem Intensitätsminimum in der Strahlmitte umformt. Um einen solchen Ringstrahl mit einem Intensitätsminimum in der Strahlmitte zu erzeugen, kann das Beugungsgitter 51 so ausgelegt werden, dass die nullte Beugungsordnung des Laserstrahls und die höheren geraden Beugungsordnungen unterdrückt werden. Alternativ kann das Beugungsgitter 51 so ausgelegt werden, dass die erste Beugungsordnung des Laserstrahls verstärkt wird und die sonstigen Beugungsordnungen unterdrückt werden.

Der Kegelspiegel 48 ist als Abschnitt eines geraden Kegels ausgebildet. Ein Kegel ist von einer Grundfläche und einer Mantelfläche begrenzt, wobei die Grundfläche bei einem geraden Kegel senkrecht zur Kegelachse 49 angeordnet ist. Die Oberfläche des Kegelspiegels 48 umfasst eine kreisförmige Grundfläche **64**, eine Mantelfläche **65** und eine Kegelspitze **66**, wobei die Kegelachse 49 senkrecht zur Grundfläche 64 angeordnet ist und durch die Kegelspitze 66 verläuft. Die Mantelfläche 65 ist für die Wellenlänge der Laserstrahlquelle 43 als reflektierende Mantelfläche ausgebildet und ein auf die Mantelfläche 65 auftreffender Laserstrahl wird an der Mantelfläche 65 überwiegend reflektiert. Der Ringstrahl 63 wird an der Mantelfläche 65 des Kegelspiegels 48 umgelenkt und der Kegelspiegel 48 erzeugt einen Laserstrahl **67**, der sich in einer Ausbreitungsebene **68** ausbreitet und auf der Projektionsfläche 41 die linienförmige Lasermarkierung 42 mit einem Öffnungswinkel von 360° erzeugt.

Im Ausführungsbeispiel sind die optische Achse des Laserstrahls, die erste optische Achse 45 der Fokussieroptik 44, die zweite optische Achse 46 der Kollimationsoptik 45, die dritte optische Achse 52 des Beugungsgitters 51 und die Kegelachse 49 des Kegelspiegels 48 koaxial zueinander angeordnet. Durch die koaxiale Anordnung der Komponenten des Lasersystems 40 liegt das Intensitätsminimum des Ringstrahls 63 auf der Kegelachse 49 und Beugungseffekte an der Kegelspitze 66 des Kegelspiegels 48 sind reduziert.

Der Reflexionsgrad der Mantelfläche 65 hängt unter anderem vom Einfallswinkel und der Polarisation eines auftreffenden Laserstrahls sowie vom Brechungsindex des Kegelspiegels 48 ab. Damit der auftreffende Ringstrahl 63 möglichst vollständig an der Mantelfläche 65 des Kegelspiegels 48 reflektiert wird, sollte der Einfallswinkel des Laserstrahls die Bedingung der Totalreflektion erfüllen. Der reflektierte Anteil kann alternativ oder zusätzlich dadurch erhöht werden, dass die Mantelfläche 65 mit einer hochreflektierenden Beschichtung versehen wird. Je höher der reflektierte Anteil des Ringstrahls 63 ist, umso größer ist die Intensität und umso besser ist die Sichtbarkeit der linienförmigen Lasermarkierung 42 auf der Projektionsfläche 41.

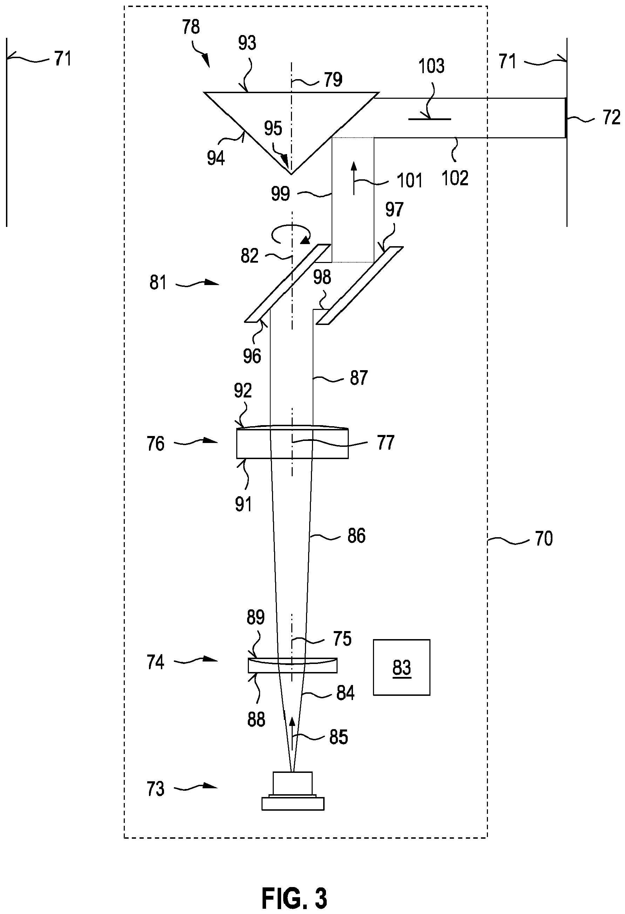

**FIG. 3** zeigt eine dritte Ausführungsform eines erfindungsgemäßen Lasersystems **70**, das auf einer Projektionsfläche **71** eine linienförmige Lasermarkierung **72** erzeugt.

Das Lasersystem 70 umfasst eine Laserstrahlquelle **73**, eine als Fokussieroptik ausgebildete erste Strahlformungsoptik **74** mit einer ersten optischen Achse **75**, eine als Kollimationsoptik ausgebildete zweite Strahlformungsoptik **76** mit einer zweiten optischen Achse **77** und eine als Kegelspiegel ausgebildete Strahlumlenkoptik **78** mit einer Kegelachse **79**. Zwischen der Kollimationsoptik 76 und dem Kegelspiegel 78 ist eine Versatzeinrichtung **81** angeordnet, die um eine Rotationsachse **82** drehbar ausgebildet ist. Die Steuerung des Lasersystems 70 erfolgt mittels einer Kontrolleinrichtung **83**.

Die Komponenten des Lasersystems 70 sind in der Reihenfolge Laserstrahlquelle 73, Fokussieroptik 74, Versatzeinrichtung 81 und Kegelspiegel 78 angeordnet. Dabei sind die erste optische Achse 75 der Fokussieroptik 74, die zweite optische Achse 77 der Kollimationsoptik 76, die Rotationsachse 82 der Versatzeinrichtung 81 und die Kegelachse 79 des Kegelspiegels 78 koaxial zueinander angeordnet.

Die Laserstrahlquelle 73 erzeugt einen divergenten Laserstrahl **84**, der entlang einer Ausbreitungsrichtung **85** ausgesandt wird. Der divergente Laserstrahl 84 trifft auf die Fokussieroptik 74, die einen fokussierten Laserstrahl **86** erzeugt. Der fokussierte Laserstrahl 86 trifft auf die Kollimationsoptik 76, die den fokussierten Laserstrahl 86 in einen kollimierten Laserstrahl **87** umformt.

Die Fokussieroptik 74 ist wie die Fokussieroptik 16 der FIG. 1 als Strahlformungsoptik mit einer planen Eintrittsfläche **88** und einer gekrümmten Austrittsfläche **89** ausgebildet und weist eine verstellbare Brennweite f auf; die erste optische Achse 75 verläuft durch den Krümmungsmittelpunkt der Austrittsfläche 89 und steht senkrecht auf der Eintrittsfläche 88. Zusätzlich zur verstellbaren Brennweite f kann die Position der Fokussieroptik 74 entlang der ersten optischen Achse 75 verstellbar ausgebildet sein. Die Kollimationsoptik 76 ist wie die Kollimationsoptik 18 der FIG. 1 als Strahlformungsoptik mit einer planen Eintrittsfläche **91** und einer gekrümmten Austrittsfläche **92** ausgebildet; die zweite optische Achse 77 verläuft durch den Krümmungsmittelpunkt der Austrittsfläche 92 und steht senkrecht auf der Eintrittsfläche 91.

Der Kegelspiegel 78 ist wie der Kegelspiegel 48 der FIG. 2 als Abschnitt eines geraden Kegels ausgebildet. Die Oberfläche des Kegelspiegels 78 umfasst eine kreisförmige Grundfläche **93**, eine Mantelfläche **94**, die Wellenlänge der Laserstrahlquelle 73 als reflektierende Mantelfläche ausgebildet ist, und eine Kegelspitze **95**, wobei die Kegelachse 79 senkrecht zur Grundfläche 93 angeordnet ist und durch die Kegelspitze 95 verläuft.

Die Versatzeinrichtung 81 ist zwischen der Kollimationsoptik 76 und dem Kegelspiegel 78 angeordnet. Die Aufgabe der Versatzeinrichtung 81 besteht darin, die Ausbreitungsrichtung des Laserstrahls so gegenüber der Kegelachse 79 zu verschieben, dass der Laserstrahl nicht auf die Kegelspitze 95 trifft. Die Versatzeinrichtung 81 ist als reflektierende Versatzeinrichtung mit einer ersten Grenzfläche **96** und einer zweiten Grenzfläche **97** auf. Ein auftreffender Laserstrahl wird an der ersten und zweiten Grenzfläche 96, 97 reflektiert. Dabei hängt der Reflexionsgrad der ersten und zweiten Grenzfläche 96, 97 unter anderem vom Einfallswinkel und der Polarisation des Laserstrahls sowie vom Brechungsindex der ersten und zweiten Grenzfläche 96, 97 ab.

Der kollimierte Laserstrahl 87 trifft auf die erste Grenzfläche 96, an der eine erste Umlenkung des kollimierten Laserstrahls 87 erfolgt, und auf die zweite Grenzfläche 97, an der eine zweite Umlenkung des kollimierten Laserstrahls 87 erfolgt. Der an der ersten Grenzfläche 96 umgelenkte Laserstrahl wird als einfach umgelenkter Laserstrahl **98** und der an der zweiten Grenzfläche 97 umgelenkte Laserstrahl als zweifach umgelenkter Laserstrahl **99** bezeichnet. Der zweifach umgelenkte Laserstrahl 99 breitet sich in einer parallelen Ausbreitungsrichtung **101** aus und wird an der Mantelfläche 94 des Kegelspiegels 78 umgelenkt. Der Kegelspiegel 78 erzeugt einen Laserstrahl **102**, der sich in einer Ausbreitungsebene **103** ausbreitet und auf der Projektionsfläche 71 die linienförmige Lasermarkierung 72 erzeugt.

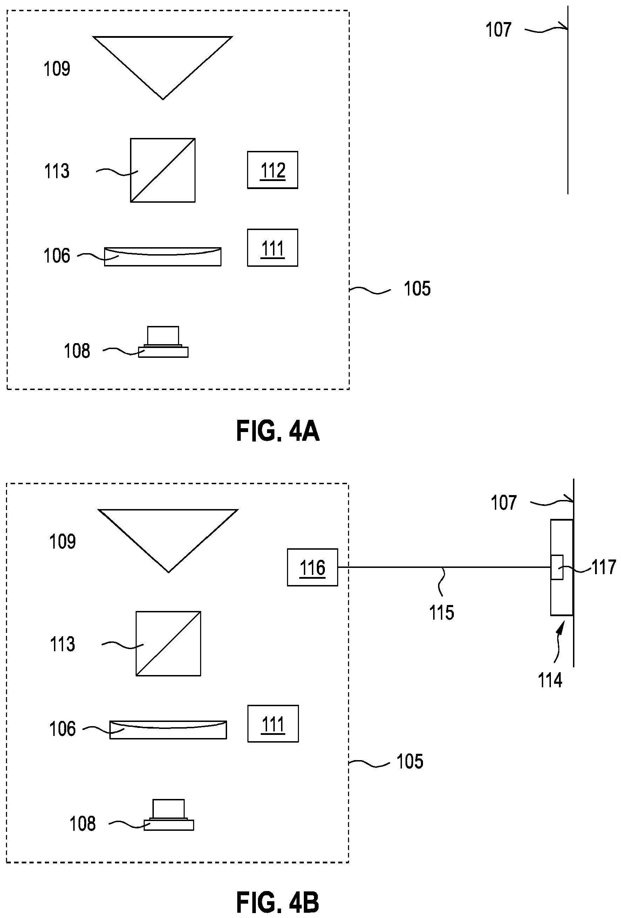

**FIGN. 4A****, B** zeigen ein erfindungsgemäßes Lasersystem **105** mit einer Fokussieroptik **106**, deren Brennweite **f** abhängig von einem Abstand **D** zwischen dem Lasersystem 105 und einer Projektionsfläche **107** verstellbar ist. Das Lasersystem 105 kann durch das Lasersystem 10 der FIG. 1, das Lasersystem 40 der FIG. 2 oder das Lasersystem 70 der FIG. 3 ersetzt werden.

Das Lasersystem 105 umfasst eine Laserstrahlquelle **108**, eine Strahlumlenkoptik **109**, eine Kontrolleinrichtung **111** und die Fokussieroptik 106. Um die Brennweite f der Fokussieroptik 106 abhängig vom Abstand D einzustellen, muss der Abstand D zwischen dem Lasersystem 105 und der Projektionsfläche 107 bekannt sein. FIG. 4A zeigt eine erste Variante und FIG. 4B eine zweite Variante, um den Abstand zwischen dem Lasersystem 105 und der Projektionsfläche 107 zu bestimmen.

Bei der in FIG. 4A gezeigten ersten Variante weist das Lasersystem 105 eine Distanzmesseinrichtung **112** auf, die geeignet ist, den Abstand D zwischen dem Lasersystem 105 und der Projektionsfläche 107 zu bestimmen. Im Ausführungsbeispiel der FIG. 4A wird ein Messstrahl der Distanzmesseinrichtung 112 mithilfe einer Strahlteilungsoptik **113** in den Strahlengang eingekoppelt.

Bei der in FIG. 4B gezeigten zweiten Variante wird ein Laserempfänger **114** verwendet, um den Abstand D zwischen dem Lasersystem 105 und der Projektionsfläche 107 zu bestimmen. Das Lasersystem 105 ist über eine Bluetooth-Verbindung **115** mit dem Laserempfänger 114 verbunden. Das Lasersystem 105 weist ein erstes Bluetooth-Sende- und/oder Empfangselement **116** auf, der Laserempfänger 114 weist ein zweites Bluetooth-Sende- und/oder Empfangselement **117** auf und die Bluetooth-Verbindung 115 verbindet das erste und zweite Bluetooth-Sende- und/oder Empfangselement 116, 117.

Das zweite Bluetooth-Sende- und/oder Empfangselement 117 sendet ein Signal aus, das vom ersten Bluetooth-Sende- und/oder Empfangselement 116 empfangen wird. Bei der Übertragung erfolgt eine Dämpfung des Signals, wobei die Dämpfung vom Abstand zwischen dem ersten und zweiten Bluetooth-Sende- und/oder Empfangselement 116, 117 abhängig ist. Die Kontrolleinrichtung 111 des Lasersystems 105 kann aus dem Verhältnis des gesendeten Signals zum empfangenen Signal den Abstand zwischen dem ersten und ersten Bluetooth-Sende- und/oder Empfangselement 116, 117 bestimmen, der gleich dem Abstand D zwischen dem Lasersystem 105 und der Projektionsfläche 107 ist.

## Patentansprüche

1. Lasersystem (10; 40; 70; 105) zum Erzeugen einer linienförmigen Lasermarkierung (12; 42; 72) auf einer Projektionsfläche (11; 41; 71; 107), aufweisend:
▪ eine Laserstrahlquelle (15; 43; 73; 108), die einen Laserstrahl (26; 54; 84) erzeugt und entlang einer Ausbreitungsrichtung (27; 55; 85) aussendet,
▪ eine Strahlumlenkoptik (21; 48; 78; 109), die den Laserstrahl umlenkt, und
▪ eine Kontrolleinrichtung (25; 53; 83; 111), die zur Steuerung des Lasersystems (10; 40; 70; 105) ausgebildet ist,
**dadurch gekennzeichnet, dass** das Lasersystem (10; 40; 70; 105) eine Fokussieroptik (14; 44; 74; 106) aufweist, deren Brennweite (f) und/oder Position verstellbar ist.

2. Lasersystem nach Anspruch 1, **dadurch gekennzeichnet, dass** die Brennweite (f) der Fokussieroptik (14; 44; 74; 106) mittels der Kontrolleinrichtung (25; 53; 83; 111) abhängig von einem Abstand (D) zwischen dem Lasersystem (10; 40; 70; 105) und der Projektionsfläche (11; 41; 71; 107) verstellbar ist.

3. Lasersystem nach Anspruch 2, **dadurch gekennzeichnet, dass** das Lasersystem (105) eine Distanzmesseinrichtung (114) aufweist, die ausgebildet ist, den Abstand (D) zwischen dem Lasersystem (105) und der Projektionsfläche (107) zu bestimmen.

4. Lasersystem nach einem der Ansprüche 1 bis 3, **dadurch gekennzeichnet, dass** das Lasersystem (105) mit einem Laserempfänger (114) über eine Bluetooth-Verbindung (115) verbindbar ist, wobei das Lasersystem (105) ein erstes Bluetooth-Sende- und/oder Empfangselement (116) aufweist, der Laserempfänger (114) ein zweites Bluetooth-Sende- und/oder Empfangselement (117) aufweist und die Bluetooth-Verbindung (115) das erste und zweite Bluetooth-Sende- und/oder Empfangselement (116, 117) verbindet.
